# EUROPEAN PATENT SPECIFICATION

(11) **EP 1 035 632 B1**
(45) Date of publication and mention of the grant of the patent: **30.07.2008**
(21) Application number: 98944309.8
(22) Date of filing: 29.09.1998
(51) Int. Cl.: H02K 5/00, H02K 5/24, H02K 7/116

(54) **MOTOR SUPPORTING DEVICE**
STÜTZVORRICHTUNG EINER MOTOR
DISPOSITIF SUPPORT DE MOTEUR

(43) Date of publication of application: 13.09.2000
(73) Proprietor: MITSUBISHI DENKI KABUSHIKI KAISHA, Chiyoda-ku Tokyo 100-8310 (JP)
(72) Inventor: ASAI, S., c/o Mitsubishi Denki Kabushiki Kaisha, Chiyoda-ku Tokyo 100-8310 (JP)
(74) Representative: HOFFMANN EITLE
(86) International application number: PCT/JP1998/004385
(87) International publication number: WO 2000/019582

(56) References cited:
- JP-A- 8 140 306
- JP-A- 9 308 188
- US-A- 3 622 822
- US-A- 4 502 718
- PATENT ABSTRACTS OF JAPAN vol. 008, no. 029 (E-226), 7 February 1984 (1984-02-07) -& JP 58 190248 A (TAMURA DENKI SEISAKUSHO:KK), 7 November 1983 (1983-11-07)
- PATENT ABSTRACTS OF JAPAN vol. 1997, no. 01, 31 January 1997 (1997-01-31) -& JP 08 237907 A (TOKYO PARTS IND CO LTD; NIPPONDENSO CO LTD), 13 September 1996 (1996-09-13)
- PATENT ABSTRACTS OF JAPAN vol. 1997, no. 12, 25 December 1997 (1997-12-25) -& JP 09 224352 A (TOKYO PARTS IND CO LTD), 26 August 1997 (1997-08-26)

## Description

### BACKGROUND OF THE INVENTION

### Technical Field

The present invention relates to a motor supporting device accommodating a motor and a driving gear for use in a disk player system, which is capable of reducing the noise produced by the gear with a relatively simple construction.

### Background Art

Conventionally, a motor for use in a disk player system is, in many cases, accommodated in a motor base and fixed to a chassis or the like by a fixing screw. Further, a so-called gearbox provided with a gear for transmitting the driving force of the motor is disposed in the nearby area of the motor base.

It should be noted that although a low-noise stability is required for a disk player system in its operating mode, when the motor is driven, its drive shaft and support shaft are vibrated to make substantial noise. For this reason, various efforts have been made so far to suppress the noise, such as providing a cover for covering the motor base, applying a predetermined pressure to those drive shaft and support shaft and so forth.

On the other hand, a motor supporting device composed by integrally forming the motor base and the gear box has been provided so far, so as to reduce the number of components and also minimize the size and weight of the entire device. The motor supporting device applied to a pickup driving mechanism in a disk player system will now be explained as shown below.

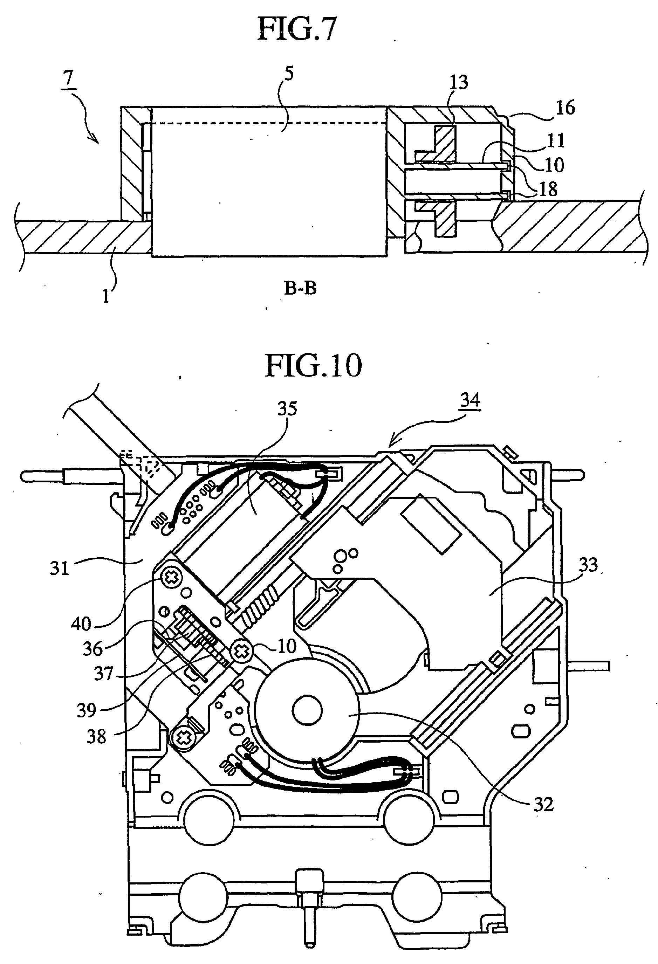

Fig. 10 denotes a plain view of an exemplary case in which a conventional motor supporting device is applied to a pickup driving mechanism. In the figure, reference numeral 31 denotes a base, 32 denotes a spindle motor for rotating an optical disk (not shown), 33 denotes a pickup, 34 denotes a pickup driving mechanism for positioning the pickup 33, and is driven by a driving force transmitted from a gear 38 later-explained. Further, reference numeral 35 denotes a sled motor that functions as a driving source of the pickup driving mechanism 34, whose drive shaft is provided with a gear (not shown). Reference numeral 36 denotes a motor base for sustaining the sled motor 35, and is provided with a gear 37 in a rotatable manner. The motor base 36 sustains the sled motor 35, exposing though the most parts of the external surface of the sled motor. Reference numeral 38 denotes a gear for transmitting the driving force fed from the gear 37 to the pickup driving mechanism 34, numeral 39 denotes a pressing member for pushing a support shaft of the gear 38, and is fixed to the motor base 36, and numeral 40 denotes a fixing screw for fixing the motor base 36 to the base 31.

The operation of the conventional motor supporting device is as follows.

When the sled motor 35 is activated, the driving force thereof is transmitted from a gear provided to the drive shaft thereof, sequentially to the gear 37, the gear 38 and to the pickup driving mechanism 34, so as to finally activate the pickup 33. During this driving force transmitting operation, the drive shaft of the sled motor 35 and the support shaft of the gear 37 are vibrated to make a noise.

Since the conventional motor supporting device is constructed as explained above, in order to suppress such noise, further components such as a covering member for the motor base 36 and a pressing member for applying a predetermined pressure to the drive shaft of the sled motor 35 or to the support shaft of the gear 37 have to be additionally provided, and due to this, a problem arises that the total cost will be raised due to the increase in the number of components and also due to inefficiency in its assembling operation.

Further examples of conventional devices can be found in JP 58-190248 A diclosing a motor positioning arrangement in which a motor is held by flexible hooks on a support housing, and in JP 08-23709 A describing a gear actuator with a motor supproting device which accomodates the motor in one part thereof and the gears in another part thereof. Also, US 3,622,822 A dicsloses an enclosure for an electric motor consisting of two halves joined by a flexible joint.

The present invention has been proposed to solve the problems aforementioned, and it is an object of the present invention to provide a motor supporting device which is capable of reducing the total number off components for improving its assembling operation, and also capable of suppressing the noise of a gear used therein.

### DISCLOSURE OF THE INVENTION

In order to achieve the above object, the motor supporting device according to the present invention is constructed in such a manner as to comprise a motor accommodating section for accommodating and holding a motor therein, and a gear holding section that is adapted to rotatably hold a gear for externally transmitting a driving force of the motor, wherein the motor supporting device further comprises a covering section, which is integrally formed with the motor accommodating section, covers the gear holding section in form of a flat plane, and comprises a side pressing section that is adapted to abut the end portion of the gear provided to the motor drive shaft. In the motor supporting device as explained above, the covering section is provided with a bending section making the covering section bendable with respect to the motor accommodating section.

Due to this construction, such a good effect as reducing the noise produced by the gear can be obtained with a relatively simple structure.

Due to this construction, the number of components can be reduced, and the noise produced by the gear mounted to the motor drive shaft can also be lowered.

The motor supporting device according to the present invention further comprises a fitting section for fixing the covering section to the motor accommodating section, with the side-pressing section being abutted to the end portion of the gear mounted to the motor drive shaft, which fitting section being provided to at least either one of the covering section and the motor accommodating section.

Due to this construction, not only the number of components is reduced, but also the covering section can be readily fixed to the motor accommodating section, so that the noise of the gear mounted to the motor drive shaft can be greatly lowered.

The motor supporting device according to the present invention further comprises a fitting section for coupling the end portion of a support shaft that is formed in the gear holding section for rotatably holding the gear to the covering section, which fitting section being provided to at least either one of the covering section and the end portion of the support shaft.

Due to this construction, not only the number of components is reduced, but the covering section can also be readily coupled to the end portion of the supporting shaft, so that the noise of the gear of the gear holding section can be greatly lowered.

### BRIEF DESCRIPTION OF THE DRAWINGS

Fig. 1 is a plain view of the motor supporting device according to a first embodiment of the present invention.
Fig. 2 is a side view of the motor supporting device.
Fig. 3 is a perspective view of a locking piece and a locking claw for use in a cover-fixing operation.
Fig. 4 is a perspective view of a locking piece and a locking claw for use in a case-fixing operation.
Fig. 5 is a sectional view corresponding to the sectional surface cut along the line A - A of Fig. 1, in a state that the motor base is in use.
Fig. 6 is a front view in a state that the motor base is in use.
Fig. 7 is a sectional view corresponding to the sectional surface cut along the line B - B of Fig. 1, in a state that the motor base is in use.
Fig. 8 is a plain view of an exemplary case in which the motor base is applied to a pickup driving mechanism.
Fig. 9 is an illustration showing the back surface of the case of Fig. 8.
Fig. 10 is a plain view of an exemplary case in which a conventional motor supporting device is applied to a pickup driving mechanism.

### BEST MODE FOR CARRYING OUT THE INVENTION

Several embodiments for carrying out best the present invention are now explained with reference to attached drawings, in order to explain the present invention to details.

### [First Embodiment]

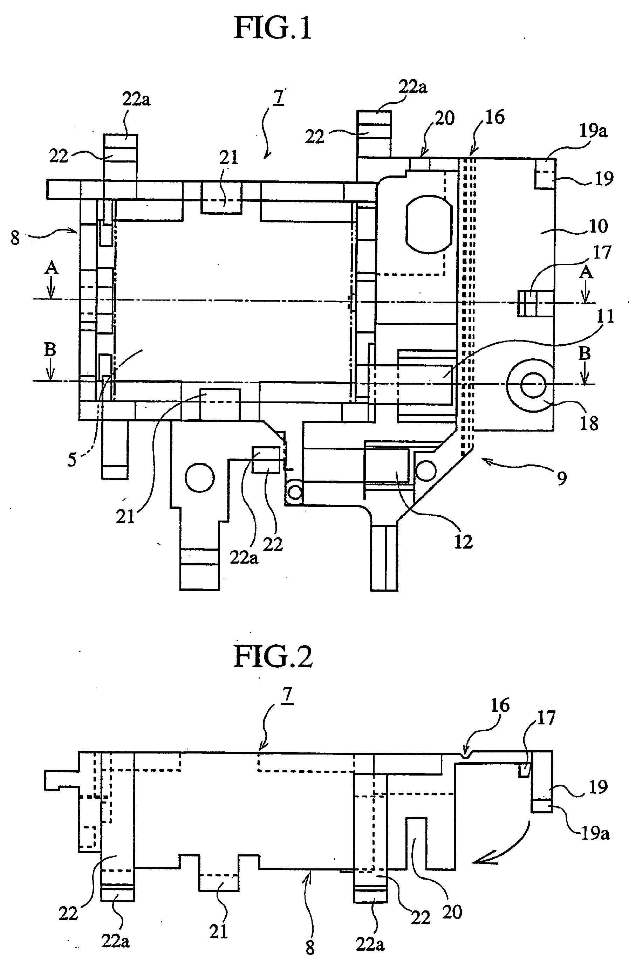

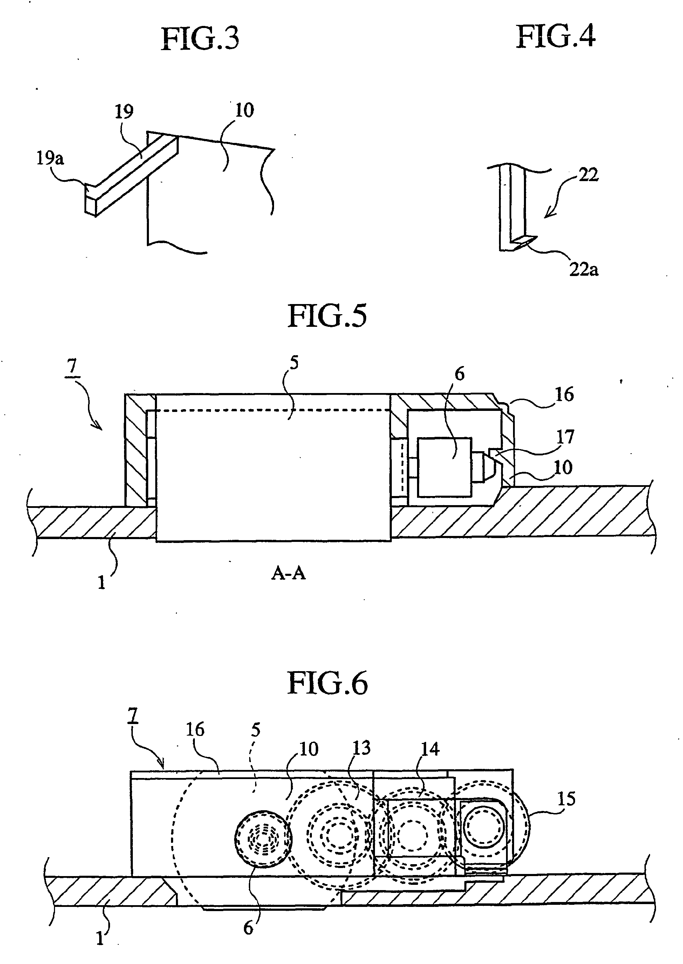

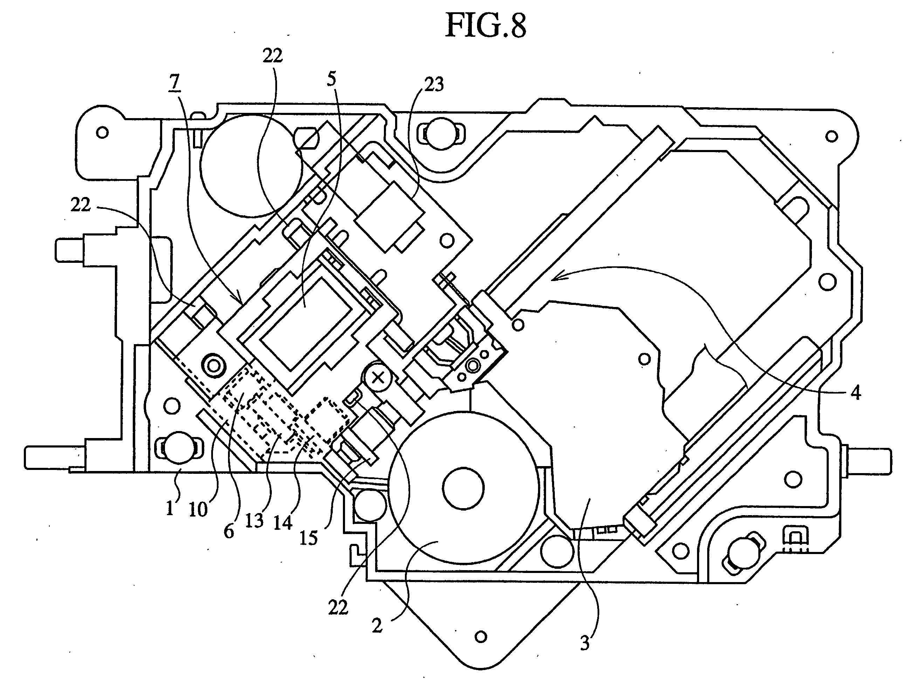

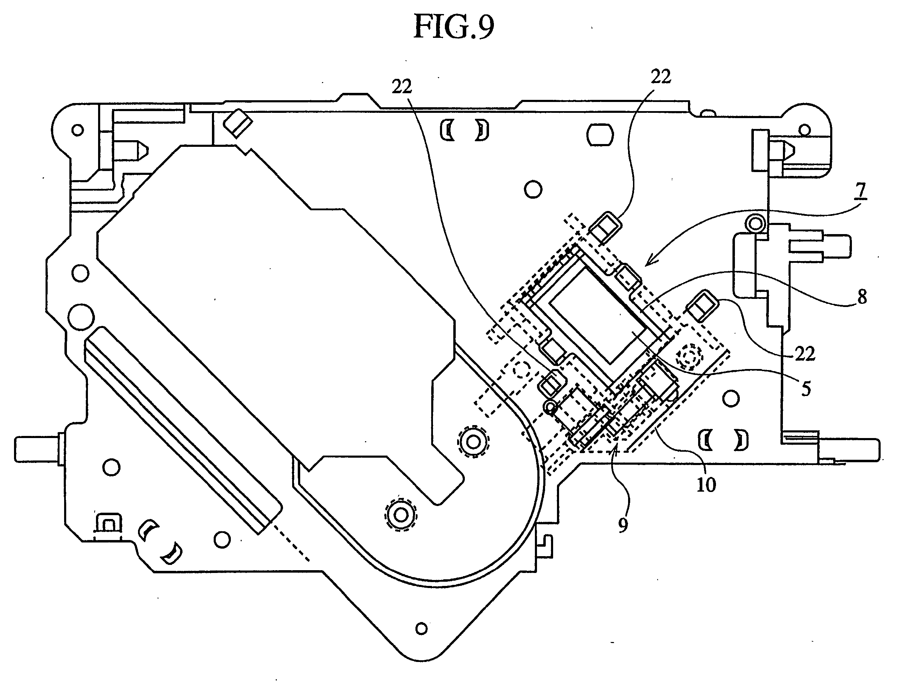

Fig. 1 is a plain view of the motor supporting device according to a first embodiment of the present invention. Fig. 2 is a side view of the motor supporting device. Fig. 3 is a perspective view of a locking piece and a locking claw for use in a cover-fixing operation. Fig. 4 is a perspective view of a locking piece and a locking claw for use in a case-fixing operation. Fig. 5 is a sectional view corresponding to the sectional surface cut along the line A - A of Fig. 1 in the state that the motor base is in use. Fig. 6 is a front view in the state that the motor base is in use. Fig. 7 is a sectional view corresponding to the sectional surface cut along the line B - B of Fig. 1 in the state that the motor base is in use. Fig. 8 is a plain view of an exemplary case in which the motor base is applied to a pickup driving mechanism, and Fig. 9 is an illustration showing the back surface of the case of Fig. 8.

In these figures, reference numeral 1 denotes a base, 2 denotes a spindle motor for rotating an optical disk, 3 denotes a pickup, 4 denotes a pickup driving mechanism for positioning the pickup 3, and is driven by a driving force transmitted from a gear 8 later-explained. Further, reference numeral 5 denotes a sled motor (motor) that functions as a driving source of the pickup driving mechanism 4, whose drive shaft is provided with a gear 6 through which the drive shaft is threaded by a pressing force.

Reference numeral 7 denotes a motor base (motor supporting device) for sustaining the sled motor 5, which is composed of a motor accommodating section 8 for holding the sled motor 5 therein, a gear holding section 9 provided in a protruded manner from the motor accommodating section 8 for rotatably holding the later-explained gears 13 and 14, and a covering section 10 provided to the motor accommodating section 8, which covers the gear holding section 9 in the form of a flat plane, and applies a side pressure to the gear 6. This motor base 7 is made of, for example, a resin such as polyacetar or the like and can be manufactured as a resin-mold product.

Reference numerals 11 and 12 are support shafts horizontally protruding from the motor accommodating section 8, and are provided respectively with the gears 13 and 14 through which they thread to rotatably hold them. These gears 13 and 14 transmit the driving force of the gear 6 to the gear 15, and the gear 15 further transmits the driving force to the pickup driving mechanism 4.

Reference numeral 16 denotes a bending section provided in a thin plate form at the root portion of the covering section 10, which makes the covering section 10 bendable with respect to the motor accommodating section 8.

Reference numeral 17 denotes a side pressing section protrudedly provided so as to abut with the end portion of the gear 6, and reduces the vibration of the gear 6 by applying a predetermined pressure to the end portion thereof, and numeral 18 denotes a bearing section (fitting portion) formed as a recess for fitting the support shaft 11 therein, and reduces the noise produced by the gear 13 by lowering the vibration of the support shaft 11.

Reference numeral 19 denotes a locking piece (fitting portion) protruding from the covering section 10 for use in a cover-fixing operation, and the end portion thereof is formed with a locking claw (fitting portion) 19a. This cover-fixing locking piece 19 securely fixes the covering section 10 to the motor accommodating section 8, by engaging the locking claw 19a with a locking groove 20 when bending the covering section 10.

Each reference numeral 21 denotes a locking claw for locking the sled motor 5, each numeral 22 denotes a locking piece for use in a case-fixing operation, which protrudes from the motor accommodating section 8, and is formed with a locking claw 22a at its end portion. This case-fixing locking piece 22 securely fixes the motor base 7 to the base 1 by engaging the locking claw 22a with a fitting hole formed in the base 1. Reference numeral 23 denotes a circuit board.

The operation of the motor supporting device according to the first embodiment of the present invention is as follows.

As shown in Figs. 6 to 8, when the sled motor 5 is activated, the driving force thereof is transmitted to the pickup driving mechanism 6 by way of the gears 13, 14 and 15 in a sequential manner, so that the pickup 3 is activated.

On this occasion, since a predetermined pressure is applied to the end portion of the gear 6 by the side pressing section 17, as shown in Fig. 5, the vibration of the gear 6 can be lowered, and the generation of the noise can thereby be reduced.

Further, as shown in Fig. 7, although the gear 13 is rotated with respect to the support shaft 11, as the end portion of the support shaft 11 is engaged with the bearing section 18 of the covering section 10, the vibration of the support shaft 11 can be reduced, and the generation of the noise can thereby be lowered.

It should be noted that by assembling the sled motor 5 and the gears 6 and 13 to the motor base 7, engaging the cover-fixing locking piece 19 with the locking groove 20 and by closing the covering section 10, the support shaft 11 is locked with the bearing section 18, so that the gear 13 can be prevented from falling down from the support shaft 11, and the assembling efficiency can thereby be improved.

As explained heretofore, according to the first embodiment of the present invention, due to the fact that the covering section 10 is bendably and integrally formed with the motor accommodating section 8, the state in which the covering section 10 is closed can be readily maintained, and also due to the fact that the covering section 10 is formed with the side pressing section 17 and the bearing section 18, the noise caused by the gears 6 and 13 can be greatly reduced, yet without increasing the number of components.

It should be noted that the first embodiment of the present invention has been explained as to the case that the present invention is applied to a pickup driving mechanism of a disk device. However, the application of the present invention is not limited to this, but it can also be applied to various small electronic devices, each comprising a motor and a driving gear, and requiring the suppression of noise generated by the gear, and even in this case the same effects can be obtained.

### Industrial Applicability

As explained heretofore, the motor supporting device related to this invention is suitable to various small electronic devices, each comprising a motor and a driving gear, and requiring the suppression of noise generated by the gear.

## Claims

1. A motor supporting device (7) comprising:
a motor accommodating section (8) for accommodating and holding a motor (5) therein, and
a gear holding section (9) that is adapted to rotatably hold a gear (6) for externally transmitting a driving force of said motor,
wherein said motor supporting device further comprises a covering section (10), which is integrally formed with said motor accommodating section, covers said gear holding section (9) in the form of a flat plane, and comprises a side pressing section (17) that is adapted to abut to the end portion of said gear (6) provided to the motor drive shaft,
**characterized in that** said covering section (10) is provided with a bending section (16) making the covering section bendable with respect to said motor accommodating section.

2. A motor supporting device according to claim 1 further comprising a fitting section (19) for fixing said covering section (9) to said motor accommodating section (8), with said side-pressing section (17) being adapted to abut to the end portion of said gear (6) mounted to said motor drive shaft, said fitting section being provided to at least either one of said covering section (10) and said motor accommodating section.

3. A motor supporting device according to claim 1 or 2 further comprising a fitting section (18) for coupling the end portion of a support shaft (11) that is formed in said gear holding section (9) for rotatably holding the gear to said covering section (10), said fitting section being provided to at least either one of said covering section and the end portion of said support shaft.

## Patentansprüche

1. Motorstützvorrichtung (7), aufweisend:
eine Motoraufnahmesektion (8) zum Aufnehmen und Halten eines Motors (5) darin, und
eine Zahnradhaltesektion (9), die eingerichtet ist, ein Zahnrad (6) drehbar zu halten, um eine Antriebskraft des Motors extern zu übertragen,
bei der die Motorstützvorrichtung weiter eine Abdecksektion (10) aufweist, die integral mit der Motoraufnahmesektion ausgebildet ist, die Zahnradhaltesektion (9) in der Gestalt einer flachen Ebene abdeckt, und eine Seitendrücksektion (17) aufweist, die eingerichtet ist, an dem Endbereich des an der Motorantriebswelle vorgesehenen Zahnrades (6) anzuliegen,
**dadurch gekennzeichnet, dass** die Abdecksektion (10) mit einer Biegesektion (16) versehen ist, um die Abdecksektion bezüglich der Motoraufnahmesektion biegbar zu machen.

2. Motorstützvorrichtung gemäß Anspruch 1, die weiter eine Anschlusssektion (19) zum Befestigen der Abdecksektion (9) an die Motoraufnahmesektion (8) aufweist, wobei die Seitendrücksektion (17) eingerichtet ist, an dem Endbereich des an der Motorantriebswelle montierten Zahnrades (6) anzuliegen, wobei die Anschlusssektion zumindest an entweder der Abdecksektion (10) oder der Motoraufnahmesektion vorgesehen ist.

3. Motorstützvorrichtung gemäß Anspruch 1 oder 2, die weiter eine Anschlusssektion (18) aufweist, um den Endbereich einer in der Zahnradhaltesektion (9) zum drehbaren Halten des Zahnrades ausgebildeten Stützwelle (11) mit der Abdecksektion (10) zu koppeln, wobei die Anschlusssektion an zumindest entweder der Abdecksektion oder dem Endbereich der Stützwelle vorgesehen ist.

## Revendications

1. Dispositif de support de moteur (7), comprenant :
une section de logement de moteur (8) pour loger et soutenir un moteur (5) en son sein, et
une section de soutien d'engrenage (9) qui est conçue pour soutenir de manière rotative un engrenage (6) afin de transmettre de manière externe une force d'entraînement dudit moteur,
dans lequel ledit dispositif de support de moteur comprend de plus une section de couverture (10), qui est formée d'un seul tenant avec ladite section de logement de moteur, couvre ladite section de soutien d'engrenage (9) sous la forme d'un plan plat, et comprend une section de compression latérale (17) qui est conçue pour buter contre la partie d'extrémité dudit engrenage (6) installé sur l'arbre d'entraînement de moteur,
**caractérisé en ce que** ladite section de couverture (10) est équipée d'une section de pliage (16) qui rend la section de couverture pliable par rapport à ladite section de logement de moteur.

2. Dispositif de support de moteur selon la revendication 1, comprenant de plus une section d'assemblage (19) pour fixer ladite section de couverture (9) à ladite section de logement de moteur (8), ladite section de compression latérale (17) étant conçue pour buter contre la section d'extrémité dudit engrenage (6) installé sur ledit arbre d'entraînement de moteur, ladite section d'assemblage étant installée sur au moins l'une de ladite section de couverture (10) et ladite section de logement de moteur.

3. Dispositif de support de moteur selon la revendication 1 ou 2, comprenant de plus une section d'assemblage (18) pour accoupler la section d'extrémité d'un arbre de support (11) qui est formé dans ladite section de soutien d'engrenage (9) afin de soutenir de manière rotative l'engrenage sur ladite section de couverture (10), ladite section d'assemblage étant fournie à au moins l'une de ladite section de couverture et la section d'extrémité dudit arbre de support.
